# EUROPÄISCHE PATENTSCHRIFT

(11) **EP 2 951 036 B1**
(45) Veröffentlichungstag und Bekanntmachung des Hinweises auf die Patenterteilung: **28.12.2016**
(21) Anmeldenummer: 14709872.7
(22) Anmeldetag: 08.01.2014
(51) Int. Cl.: B60C 23/00

(54) **REIFENFÜLLDRUCK-EINSTELLVORRICHTUNG FÜR EIN REIFENFÜLLSYSTEM EINES FAHRZEUGS**
TYRE-PRESSURE ADJUSTING DEVICE FOR A TYRE INFLATION SYSTEM OF A VEHICLE
DISPOSITIF DE RÉGLAGE DE LA PRESSION DE GONFLAGE DES PNEUS POUR UN SYSTÈME DE GONFLAGE DE PNEUS D'UN VÉHICULE

(30) Priorität: 01.02.2013 DE 102013001758
(43) Veröffentlichungstag der Anmeldung: 09.12.2015
(73) Patentinhaber: WABCO GmbH, 30453 Hannover (DE)
(72) Erfinder: DIECKMANN, Thomas, 30982 Pattensen (DE); ZIELKE, Frank, 30890 Barsinghausen (DE)
(74) Vertreter: Lauerwald, Jörg
(86) Internationale Anmeldenummer: PCT/EP2014/000018
(87) Internationale Veröffentlichungsnummer: WO 2014/117909

(56) Entgegenhaltungen:
- US-A- 2 989 989

## Beschreibung

Die Erfindung betrifft eine Reifenfülldruck-Einstellvorrichtung für ein Reifenfüllsystem eines Fahrzeugs und ein derartiges Reifenfüllsystem.

Die EP 1 051 302B1 zeigt eine derartige Reifenfülldruck- Einstellvorrichtung. Insbesondere bei agrartechnischen Fahrzeugen wie z. B. Traktoren kann der Reifenfülldruck durch das Fahrzeug selbst überprüft und eingestellt werden. Hierfür sind im Bereich der Radanbindungen bzw. Felgen Drehübertrager vorgesehen, die eine Druckluftübertragung des Reifenfülldrucks zu den angeschlossenen Fahrzeugreifen der Fahrzeugräder ermöglichen. Somit kann der Reifenfülldruck überprüft und Druckluft nachgefüllt oder abgelassen werden. Die Reifenfülldruck-Einstellvorrichtung weist im Allgemeinen einen Druckluftanschluss für eine Druckluftzufuhr, eine elektronische Steuervorrichtung, eine über die elektronische Steuereinrichtung angesteuerte Modulator-Ventileinrichtung und einen von der Steuereinrichtung ausgelesenen Drucksensor auf. Durch entsprechende Ansteuerung der Modulator- Ventileinrichtung kann ein jeweiliger Druckübertrager zur Befüllung mit der Druckluftzufuhr und zur Druckmessung mit dem Drucksensor verbunden werden.

Die US 2989989A offenbart ein Drehventil zur Verteilung der Luft in die einzelnen Reifen. Dieses Drehventil wird allerdings nicht mittels einer Steuereinrichtung mit Drucksensor aktiviert.

Bei einer größeren Anzahl von Rädern bzw. Achsen nimmt die Anzahl der in der Modulator-Ventileinrichtung benötigten Ventile entsprechend stark zu, was zu einem erheblichen apparativen Aufwand führt, im Allgemeinen mit mehreren Ventil-Stufen zum sukzessiven Verteilen der Druckluft. Entsprechend nimmt die Anzahl der von der Steuereinrichtung elektrisch zu bestromenden Solenoid-Ventile zu. Auch die Ausbildung der Drehübertrager zur sicheren Abdichtung während der Reifenbefüllung und Reifenfülldruck-Messung und zur sicheren Trennung während des normalen Betriebes des Fahrzeuges erfordern im Allgemeinen einigen Beschaltungsaufwand. Zuverlässige Drehübertrager sind zum Teil mit einem Steueranschluss zum Abdichten, d. h. dem pneumatischen Einkuppeln, und einem Füllanschluss zum Befüllen und Druckmessen ausgebildet, um Leckagen und Fehler beim Befüllen und Druckmessen zu vermeiden. Bei einer derartigen Ausbildung mit zwei Anschlüssen kann zwischen der Modulations-Ventileinrichtung und dem Drehübertrager wiederum - vorzugsweise in Achsnähe bzw. Reifennähe - im Allgemeinen eine Pneumatikeinrichtung ausgebildet werden, die an die von der Modulations- Ventileinrichtung kommende pneumatische Verbindungsleitung angeschlossen ist und im allgemeinen zunächst einen Druckstoß an den Steueranschluss anlegt und nachfolgend den Füllanschluss belüftet. Derartige zusätzliche Pneumatik-Einrichtungen zur Ansteuerung der Drehübertrager sind entsprechend mit erheblichem Hardware-Aufwand verbunden.

Der Erfindung liegt die Aufgabe zu Grunde, eine Reifenfülldruck- Einstellvorrichtung für ein Reifenfüllsystem eines Fahrzeugs und ein derartiges Reifenfüllsystem zu schaffen, die mit relativ geringem Aufwand eine sichere Reifenbefüllung und Fülldruck-Messung ermöglichen.

Diese Aufgabe wird durch eine Reifenfülldruck-Einstellvorrichtung nach Anspruch 1 sowie ein Reifenfüllsystem nach Anspruch 14 gelöst. Die Unteransprüche beschreiben bevorzugte Weiterbildungen. Ergänzend ist ein Fahrzeug mit einer derartigen Reifenfülldruck-Einstellvorrichtung vorgesehen. Weiterhin betrifft die Erfindung grundsätzlich auch ein Verfahren zum Einstellen eines Reifenfülldrucks.

Erfindungsgemäß weist die Modulations-Ventileinrichtung, die zum selektiven Verbinden der einzelnen Drehübertrager mit dem Füllanschluss und dem Drucksensor vorgesehen ist, somit ein Drehventil mit einem drehbaren Stellglied auf. Das drehbare Stellglied ist in mehrere Drehstellungen bzw. Stellpositionen einstellbar, in denen es jeweils den Druckluftanschluss und/oder den Drucksensor mit einem der Drehübertrager verbindet.

Der Erfindung liegt der Gedanke zu Grunde, statt einer Kaskade oder Reihe von elektropneumatischen Ventilen ein Drehventil vorzusehen, dass durch seine mehreren Drehstellungen eine selektive Zuordnung bzw. Verteilung ermöglicht. Hierbei wird erfindungsgemäß erkannt, dass insbesondere bei einer größeren Anzahl von anzusteuernden Drehübertragern eine stark, gegebenenfalls sogar exponentiell, wachsende Anzahl von Solenoid-Ventilen vorzusehen ist. Ein Drehventil mit mehreren Drehstellungen zum selektiven Verbinden eines von mehreren Ausgangsanschlüssen ermöglicht demgegenüber eine deutliche Reduzierung des Hardware-Aufwands an Ventilen. Die herkömmliche komplexe Modulations-Ventileinrichtung, die zwischen der Druckluftzufuhr und den externen, zu den Drehübertragern führenden Verbindungsleitungen vorgesehen ist, kann somit z. B. durch eine Vorsteuer-Ventileinrichtung mit relativ wenigen pneumatischen und elektropneumatischen Ventilen und das Drehventil ersetzt werden.

Die gesamte Reifenfülldruck- Einstellvorrichtung mitsamt dem Drehventil, einer vorgeschalteten Vorsteuer-Ventileinrichtung, einer Steuereinrichtung und einem Drucksensor kann hierbei in einem gemeinsamen Gehäuse aufgenommen sein, sodass die zwischen der Steuereinrichtung und dem Drehventil sowie der Vorsteuer-Ventileinrichtung ausgebildeten elektrischen Leitungen für Steuersignale und ein Druckmesssignal vollständig in dem Gehäuse aufgenommen sind, ohne externe elektrische Leitungen, die insbesondere im Automotive-Bereich hohen Belastungen ausgesetzt sind. Die Reifenfülldruck- Einstellvorrichtung kann somit eine kompakte, zuverlässigen Einheit bzw. ein Modul bilden, das zwischen der Druckluftzufuhr und externe Verbindungseitungen gesetzt werden kann, die zu den Drehübertragern bzw. die Drehübertrager aufnehmenden Pneumatikeinrichtungen führen.

Das Drehventil weist hierzu vorzugsweise eine oder zwei interne Verbindungsleitungen auf, die einen Eingangsanschluss mit einem von mehreren Ausgangsanschlüssen verbinden. Vorteilhafterweise weist das Drehventil einen Stator auf, gegenüber dem das Stellglied drehbar ist. Die Druckluftanschlüsse des Drehventils, d. h. Eingangs- und Ausgangsanschlüsse, können an dem Stator vorgesehen sein, so dass das drehbare Stellglied lediglich zum selektiven Verbinden der entsprechenden Anschlüsse des Stators dient. Durch eine derartige Ausbildung ist der Hardware-Aufwand zur Ausbildung der drehbaren Teile gering; das mechanisch zu verstellende Stellglied, d. h. z. B. ein Revolver oder Rotor, kann grundsätzlich im Wesentlichen mit einer oder mehreren Verbindungsleitungen, ohne komplexere weitere Mittel, ausgestattet sein.

Erfindungsgemäß wird somit bewusst eine Drehverstellung gewählt, die anders als herkömmliche Magnetventile nicht nur zwei durch lineare Verstellung einzustellende Stellzustände aufweist, sondern eine Drehung erfordert. Hierdurch kann jedoch die Ausbildung von Schaltkaskaden oder anderer hierarchischer Strukturen mit einer Vielzahl von Ventilen vermieden werden. Hierbei wird ein Drehventil gewählt, da dieses vorzugsweise eine Verstellung in lediglich eine Richtung, der Drehrichtung, ermöglicht und dennoch eine Rückstellung in die Ausgangsposition möglich ist, da bei vorzugsweise symmetrischer Unterteilung nach der vorgegebenen Anzahl von Drehstellungen wieder die Ausgangsposition erreicht werden kann. Somit können durch einen einzigen Stellvorgang sukzessiv mehrere unterschiedliche Drehstellungen und wiederum eine Ausgangstellung, insbesondere Neutralstellung bzw. Ruhestellung angesteuert werden. Es kann der Hardware-Aufwand zur Verstellung trotz der eventuell größeren Anzahl von Stellungen gering gehalten werden.

Zur Verstellung des Drehventils in seine zulässigen Drehpositionen ist vorteilhafterweise eine elektrische Stellantriebsvorrichtung vorgesehen, die von der Steuereinrichtung angesteuert wird. Diese kann z. B. als elektromechanischer Stößel ausgebildet sein, der bei Bestromung eine mechanische Längsverstellung durchführt, um das Drehventil entsprechend in eine vorgegebene Drehrichtung weiter zu drehen. Alternativ kann der Antrieb über einen elektrischen Schrittmotor erfolgen.

Das Drehventil kann gemäß unterschiedlichen Ausführungen eine einzige Druckluft-Leitung oder zwei Druckluft-Leitungen aufnehmen und verteilen. Bei der Ausbildung mit einer einzigen Druckluft-Leitung werden die Drehübertrager somit durch eine einzige pneumatische Verbindungsleitung angesteuert, z. B. mit geeigneter pneumatische Signalgebung wie in EP 1 051 302 B1 beschrieben oder durch jeweils eine vorgeschaltete Pneumatik- Einrichtung, die einen Steuereingang und Fülleingang des Drehübertragers ansteuert.

Bei der Ausbildung mit zwei Druckluft-Leitungen können im drehbaren Stellglied zwei pneumatische Leitungen ausgebildet sein, so dass zu jedem Drehübertrager eine externe Steuerleitung und eine externe Füllleitung verlaufen. Hierdurch wird eine einfachere Ausbildung der radnahen Pneumatikeinrichtungen ermöglicht, die nicht mehr die Drucksignale einer einzigen pneumatischen Verbindungseitung aufnehmen, um hieraus sukzessive eine Ansteuerung des Steueranschlusses und nachfolgend des Füllanschlusses zu ermöglichen.

Das drehbare Stellglied kann gegenüber dem Stator ergänzend axial verstellbar sein; hierdurch wird eine Ausbildung ermöglicht, bei der das drehbare Stellglied in den Zwischenstellungen zwischen den zulässigen Drehstellungen von dem Stator entfernt bzw. abgekoppelt ist, und lediglich in den zulässigen Drehstellungen eine pneumatische Verbindung des Eingangsanschlusses an den jeweiligen Ausgangsanschluss erfolgt. Hierzu kann zwischen dem Stator und dem drehbaren Stellglied eine Gleit- oder Rolleinrichtung mit axialer Verstellung vorgesehen sein; diese kann durch z. B. an einem der beiden Bauteilen ausgebildeter Nockenbahn bzw. wellenförmiger Bahn und an dem anderen Bauteil ausgebildeter Gleiteinrichtung oder Rolleinrichtung erfolgen, so dass bei einer Drehung jeweils ein axialer Versatz erfolgt.

Zwischen dem drehbaren Stellglied und dem Stator können geeignete Federeinrichtungen angebracht werden. Gemäß einer vorteilhaften Ausbildung ist eine erste, das drehbare Stellglied von dem Stator trennende bzw. wegdrückende Federeinrichtung vorgesehen, und eine zweite, entgegengesetzte Federeinrichtung zur Ausbildung einer das drehbare Stellglied auf den Stator drückenden zweiten Federkraft; die zweite Federkraft ändert hierbei ihre Federstärke in Abhängigkeit von der Drehposition. Bei der Ausbildung mit Wellenbahnen bzw. Nockenbahnen kann die zweite Federeinrichtung durch einzelne, an einem verstellbaren Führungsrädchen oder verstellbaren Gleitkopf vorgesehene Federn ausgebildet sein, die somit in Abhängigkeit der Position auf der Nockenbahn - Berg oder Tal - stärker gestaucht oder entspannter sind, so dass sie im stärker gestauchten Zustand die größere Federkraft aufbringen, die die entgegenwirkende erste Federkraft überwindet und zum Anschluss bzw. Einkuppeln führt.

Weiterhin kann erfindungsgemäß auch eine Ausbildung des Drehventils mit aneinander gleitenden Keramikflächen vorgesehen sein, bei denen z. B. am Stator ein Lochmuster ausgebildet ist, dessen einzelne Löcher durch Verbindungsleitungen des Stellglieds je nach Drehstellung verbunden werden.

Bei der Ausbildung des Drehventils zum Verbinden bzw. Verteilen sowohl einer Steuerleitung als auch einer Füllleitung sind vorteilhafterweise im drehbaren Stellglied (bzw. Revolver oder Rotor) zwei Verbindungsleitungen ausgebildet. Hierbei kann ein erster Eingangsanschluss z. B. radial in der Mitte, d. h. z. B. direkt in der Drehachse, und der andere Eingangsanschluss durch einen äußeren radialen Ring ausgebildet werden, so dass eine erste Verbindungsleitung das zentrale mittlere Loch mit einem inneren Kreisring von Anschlusslöchern, und eine zweite Verbindungsleitung den radial äußeren Ring mit einem äußeren Kreisring von Anschlusslöchern verbindet. Somit kann auch die Verteilung von zwei Leitungen durch ein einziges drehbares Stellglied erfolgen, mit lediglich einer Stellantriebsvorrichtung.

Die Ausbildung eines Drehventils ermöglicht vorteilhafter Weise die Integration des Drucksensors und/oder der weiteren Ventile der Vorsteuer-Ventileinheit, d.h. von Magnetventilen und pneumatischen Ventilen. Hierbei können im Stator Bohrungen ausgebildet sein, in oder an die der Drucksensor und/oder die weiteren Ventile der Vorsteuer-Ventileinheit angeschlossen und/oder integriert sind. so dass eine kompakte, sichere und robuste Ausbildung möglich ist.

Das Drehventil kann insbesondere in sechs Drehstellungen unterteilt sein, d.h. in 60°-Schritten verstellt werden. Hierbei wird erfindungsgemäß erkannt, dass eine derartige Unterteilung einen Einsatz eines einheitlichen Drehventils, gegebenenfalls auch einer einheitlichen Reifenfülldruck- Einstellvorrichtung in unterschiedlichen Fahrzeugen, sowohl in zwei- als auch in dreiachsigen Fahrzeugen ermöglicht. Hierdurch können die meisten Fahrzeuge, sowohl LKW als auch Anhängefahrzeuge, z. B. auch landwirtschaftliche Fahrzeuge wie Traktoren abgedeckt werden.

Somit kann ein Reifenfülldruck-Modulator ausgebildet werden, der in einem Gehäuse sowohl das Drehventil als auch die elektrischen Vorsteuerventile zwischen der Druckluftzufuhr und dem Drehventil aufnimmt. Ergänzend ist vorteilhafter Weise auch die elektronische Steuereinrichtung (ECU) in dem Gehäuse aufgenommen, so dass die elektrische Ansteuerung und Bestromung vollständig innerhalb des Gehäuses erfolgt. Externe elektrische Leitungen außerhalb des Modulator-Gehäuses sind somit nicht mehr erforderlich, wodurch die Robustheit und Zuverlässigkeit deutlich erhöht wird.

Die Erfindung wird im Folgenden anhand der beiliegenden Zeichnungen an einigen Ausführungsformen näher erläutert. Es zeigen:
- Fig. 1: einen elektropneumatischen Schaltplan eines Fahrzeuges mit einem Reifenfüllsystem gemäß einer Ausführungsform der Erfindung;
- Fig. 2: eine Ausbildung einer Reifenfülldruck-Einstellvorrichtung des Reifenfüllsystems gemäß einer Ausführungsform in Grundstellung, in einem Schnitt entlang der Drehachse des Drehventils;
- Fig. 3: eine der Fig. 2 entsprechende Darstellung in einer Belüftungsposition;
- Fig. 4: eine entsprechende Darstellung in Reifendruckmessposition;
- Fig. 5: weitere Ansichten des Drehventils gemäß der Ausführungsform;
- Fig. 6: eine Darstellung eines Select-Low-Ventils zum Einsatz bei Zwillingsreifen;
- Fig. 7: eine elektropneumatisches Schaltdiagramm eines Fahrzeuges mit einem Reifenfüllsystem gemäß einer weiteren Ausführungsform mit Verteilung von Steuerdruck und Fülldruck;
- Fig. 8: Aufsichten auf die Verteilerfläche des Drehventils von Fig. 7.

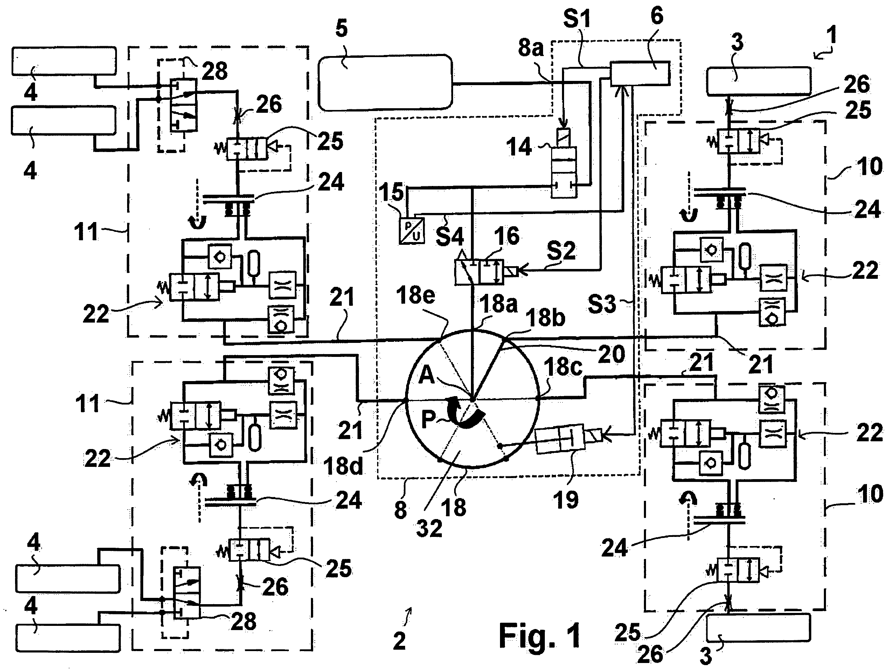

Fig. 1 zeigt ein Fahrzeug 1 mit einem Reifenfüllsystem 2, Vorderreifen 3 und Hinterreifen 4. Die Vorderreifen 3 und Hinterreifen 4 sind Teile der Vorderräder und Hinterräder und werden durch das Reifenfüllsystem 2 befüllt, wobei ihr Reifenfülldruck vorteilhafterweise geregelt wird. Die Hinterreifen 4 sind jeweils Doppelreifen bzw. Reifen von Doppelrädern (twin tire).

Das Reifenfüllsystem 2 wird von einer Druckluftzufuhr 5 gespeist, die einen Anschluss an einen Kompressor oder vorteilhafterweise ein an einen Kompressor angeschlossenes Reservoir darstellt. Das Reifenfüllsystem 2 weist einen durch gestrichelte Linien umrandeten, als Reifenfülldruck- Einstelleinrichtung dienenden Reifenfülldruck-Modulator 8 (TPC- Modulator, Tire-Pressure-Control-Modulator), und an den Reifenfülldruck- Modulator 8 über externe Verteilerleitungen 21 angeschlossene Pneumatikeinrichtungen 10 und 11 auf. An die beiden vorderen Pneumatikeinrichtungen 10 sind die Vorderreifen 3, an die beiden hinteren Pneumatikeinrichtungen 11 jeweils die beiden (Zwillings-) Hinterreifen 4 der Doppelräder angeschlossen.

Der Reifenfülldruck-Modulator 8 ist mit einem Drucklufteinlass 8a pneumatisch an die Druckluftzufuhr 5 angeschlossen und weist eine elektronische Steuereinrichtung 6, die intern in dem Reifenfülldruck-Modulator 8 Steuersignale S1, S2 und S3 ausgibt und ein Druckmess-Signal S4 aufnimmt, weiterhin ein an den Drucklufteinlass 8a angeschlossenes, durch das erste Steuersignal S1 angesteuertes 2/2-Sperrventil (Solenoid-Sperrventil) 14 und einen an den Ausgang des 2/2-Sperrventils 14 angeschlossenen, das Druckmess-Signal S4 ausgebenden Drucksensor 15 auf. Weiterhin ist parallel zum Drucksensor 15 an den Ausgang des 2/2-Sperrventils 14 ein durch das zweite Steuersignal S2 geschaltetes 3/2- Wegeventil 16 angeschlossen, das in der Ruhestellung sperrt und bei Aufnahme des zweiten Steuersignals S2 den Eingang des Drucksensors 15 und den Ausgang des 2/2-Sperrventils 14 an einen Eingangsanschluss 18a eines Drehventil 18 legt.

Das Drehventil 18 wird durch eine Stellantriebsvorrichtung 19 verstellt, die durch ein drittes Steuersignal (Stellsignal) S3 angesteuert wird. Das Drehventil 18 weist den Eingangsanschluss 18a und vier Ausgangsanschlüsse 18b, 18c, 18d, 18e auf, wobei die Ausgangsanschlüsse 18b und 18c für die ersten Pneumatikeinrichtungen 10 der Vorderreifen 3 und die Ausgangsanschlüsse 18d und 18e für die zweiten Pneumatikeinrichtungen 11 der Hinterreifen 4 vorgesehen sind. Das Drehventil 18 weist einen (in Fig. 1 nicht gezeigten) Stator 30 und ein gegenüber dem Stator 30 drehbares Stellglied, den Revolver 32 auf, in dem eine interne Verteilerleitung 20 ausgebildet ist, die an den Eingangsanschluss 18a angeschlossen ist und in den verschiedenen Drehstellungen des Revolvers 32 selektiv an einen der Ausgangsanschlüsse 18b, 18c, 18d und 18e angelegt wird; zu diesen vier Betriebs-Schaltstellungen kann vorteilhafterweise ergänzend eine Ruhe-Schaltstellung (oder wie hier gezeigt zwei Ruhe- Schaltstellungen) vorgesehen sein, in der die interne Verteilerleitung 20 an keinem der Ausgangsanschlüsse 18b bis 18e angeschlossen ist.

Wie bereits aus der schematischen Schaltung der Fig. 1 ersichtlich ist, sind die Ausgangsanschlüsse 18b, 18c, 18d, 18e mit gleichem radialen Abstand gegenüber einer Rotationsachse A in Umfangsrichtung verteilt angeordnet; die interne Verteilerleitung 20 verläuft von der Rotationsachse A radial nach Außen und wird in den verschiedenen Schaltstellungen jeweils an einen der Ausgangsanschlüsse 18b bis 18d gelegt. Die interne Verteilerleitung 20 stellt somit einen in Drehrichtung um die Rotationsachse A verstellbaren Verteilerfinger dar. Die Stellantriebsvorrichtung 19 verstellt den Revolver 32 gegenüber dem Stator 30; vorteilhafterweise erfolgt die Drehverstellung zur einfacheren mechanischen Ausbildung jeweils in einheitlicher, durch Pfeil P angezeigter Rotationsrichtung und um einen festen Drehwinkel. Bei der in Fig. 1 gezeigten sechszähligen Unterteilung sind die vier Drehstellungen zum Anschluss von 18b, 18c, 18d, 18e und zwei Ruhestellungen vorgesehen. Die 60° Aufteilung ermöglicht vorteilhafterweise, dass hiermit auch dreiachsige Fahrzeuge ausgestattet werden können und somit mit einem einheitlichen Drehventil die meisten LKW sowie auch Anhänger erfasst werden können.

Die Stellantriebsvorrichtung 19 verstellt somit den Revolver 32 jeweils um 360°/6 = 60°, wobei bei zyklischem Durchlauf sämtliche Drehstellungen durch eine entsprechende Anzahl von Stellvorgängen einstellbar sind.

Die Steuereinrichtung 6 steuert über das erste Steuersignal S1 das 2/2-Sperrventil 14 an, um einen Befüllvorgang zu starten und hierfür die Druckluftzufuhr 5 an das 3/2-Wegeventil 16 anzuschließen. Durch das zweite Steuersignal S2 steuert sie entsprechend das 3/2-Wegeventil 16 an, um dieses von der sperrenden Grundstellung in eine Durchlassstellung zu schalten, so dass das Drehventil 18 an die Druckluftzufuhr 5 angeschlossen ist. Wird das 3/2-Wegeventil 16 bei geschlossenem 2/2-Sperrventil 14 angesteuert, so liegt nur der Drucksensor 15 an dem Drehventil 18 an, ohne Beeinflussung durch die Druckluftzufuhr, und ermöglicht eine Druckmessung des Druckes an dem jeweils angeschlossenem Ausgangsanschluss 18b, 18c, 18d, 18e.

Die Pneumatikeinrichtungen 10 und 11 dienen jeweils dazu, bei Druckluftbeaufschlagung durch den Reifenfülldruck-Modulator 8 über die jeweils eine externe Verbindungsleitung 21 in einem ersten Schritt den zunächst abgekoppelten Reifen 3 oder 4 pneumatisch anzukuppeln, d.h. abzudichten, und in einem zweiten Schritt nachfolgend eine Befüllung und/oder Druckmessung des jeweils angeschlossenen Reifens 3 oder 4 über die externe Verbindungsleitung 21 zu ermöglichen. Hierzu weisen die Pneumatikeinrichtungen 10 und 11 jeweils eine Drehübertrager-Drucksteuerung (rotary transmitter pressure control) 22 auf, die bei sämtlichen Pneumatikeinrichtungen 10 und 11 baugleich ausgebildet sein kann, einen nachfolgenden Drehübertrager (rotary transmitter) 24, ein vorteilhafterweise als Überstromventil ausgebildetes Reifendruck-Steuerventil 25 und vorzugsweise eine Drossel 26. Bei der gezeigten Verwendung von Zwillingsrädern bzw. Doppel-Hinterreifen 4 ist vorteilhafterweise eine zusätzliche Ventileinrichtung vorgesehen, hier eine SelectLow-Ventileinrichtung 28 (auch Zwillingsreifen-Steuerventil genannt), die als pneumatisch doppelt angesteuertes 3/2-Wegeventil ausgebildet ist, so dass der angeschlossene Hinterreifen 4 mit höherem Druck das Zwillingsreifen-Steuerventil 28 jeweils derartig durchsteuert, dass dessen Eingang an den anderen Hinterreifen 4 angeschlossen ist, so dass hier eine selbsttätige Regulierung erfolgt, wonach immer der Reifen mit geringerem Druck befüllt wird. Hier sind jedoch entsprechend auch andere, an sich bekannte Zwillingsreifen-Steuerventile 28 oder komplexere Ventileinrichtungen möglich.

Die Ventile 25, 28 und die Drossel 26 sind somit bereits im sich drehenden Bereich des jeweiligen Rades vorgesehen; der Drehübertrager 24 stellt eine pneumatisch angesteuerte Kupplung dar. Beim Abdichtvorgang legt die Drehübertrager-Drucksteuerung 22 in an sich bekannter Weise Druck auf einen Steueranschluss 24a des Drehübertragers 24, wodurch die Abdichtung des Drehübertragers 24 bewirkt wird, so dass nachfolgend die Befüllung über einen Füllanschluss 24b des Drehübertragers 24 erfolgen kann, wobei die den im Füllvorgang eingegebene Druckluft zunächst das als Überströmventil ausgebildete Reifendruck-Steuerventil 25 durchschaltet und nachfolgend die Vorderreifen 3 bzw. die Hinterreifen 4 befüllt. Auch während einer nachfolgenden Druckmessung bleibt das Reifendruck-Steuerventil 25 offen, wobei auch der Füllanschluss 24b offen bleibt.

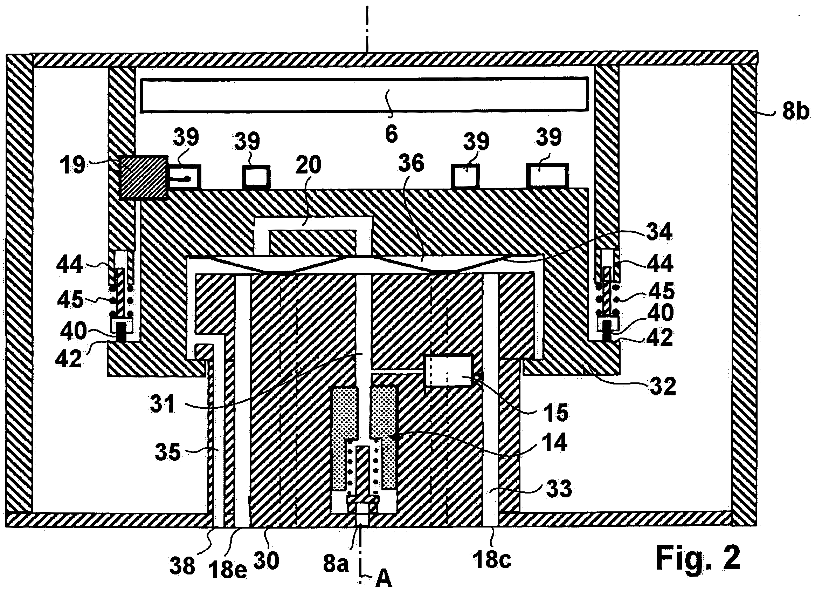

Fig. 2 bis 4 zeigen beispielhaft den Aufbau des Reifenfülldruck-Modulators 8, der hier die Steuereinrichtung 6 mit aufnimmt, so dass elektrische Leitungen lediglich innerhalb des Gehäuses 8b des Reifenfülldruck-Modulators 8 verlaufen. Die Steuereinrichtung 6 (ECU) kann insbesondere an dem Gehäuse 8b bzw. der Innenseite einer Gehäusewand angebracht sein. Der Stator 30 ist fest in dem Gehäuse 8b angebracht; der Eingangsanschluss 8a ist im Stator 30 ausgebildet. Weiterhin sind im oder am Stator 30 das elektrisch angesteuerte (Magnet-)2/2-Sperrventil 14 und der Drucksensor 15 aufgenommen; vorteilhafterweise verläuft eine Bohrung 31 entlang der Rotationsachse A durch den Stator 30, so dass das 2/2-Sperrventil 14 z. B. in der Bohrung 31 aufgenommen und der Drucksensor 15 an die Bohrung 31 angeschlossen sein kann. Der Stator 30 nimmt den als Stellglied dienenden Revolver 32 auf, in dem die interne Verteilerleitung 20 ausgebildet ist. Zwischen dem Revolver 32 und dem Stator 30 ist eine Federeinrichtung in Form einer Ringfeder 34 vorgesehen, die somit in Axialrichtung, d. h. Richtung der Rotationsachse A eine Federvorspannung ausbildet und in der in Fig. 2 gezeigten Entlüftungsposition den Revolver 32 vom Stator 30 abhebt. In dem Stator 30 sind weiterhin parallel zur Rotationsachse A verlaufende Bohrungen 33 ausgebildet, die einen zwischen dem Stator 30 und dem Revolver 30 ausgebildeten Zylinderraum 36 mit den jeweiligen Ausgangsanschlüssen 18b bis 18e verbinden. In der Entlüftungsposition der Fig. 2 sind somit sämtliche Ausgangsanschlüsse 18b bis 18e über den Zylinderraum 36 und über eine von dem Zylinderraum 36 durch den Stator 30 verlaufende Bohrung 35 an einen Entlüftungsanschluss 38 des als Druckluftverteiler dienenden Drehventils 18 gelegt und somit entlüftet. Die Druckluftzufuhr 5 ist über das in seiner sperrenden Ruhestellung vorliegenden 2/2-Sperrventil 14 abgesperrt.

Die Stellantriebsvorrichtung 19 kann z. B. wie gezeigt an Antriebsflächen 39 des Revolvers 32 angreifen und ist gehäuseseitig gelagert.

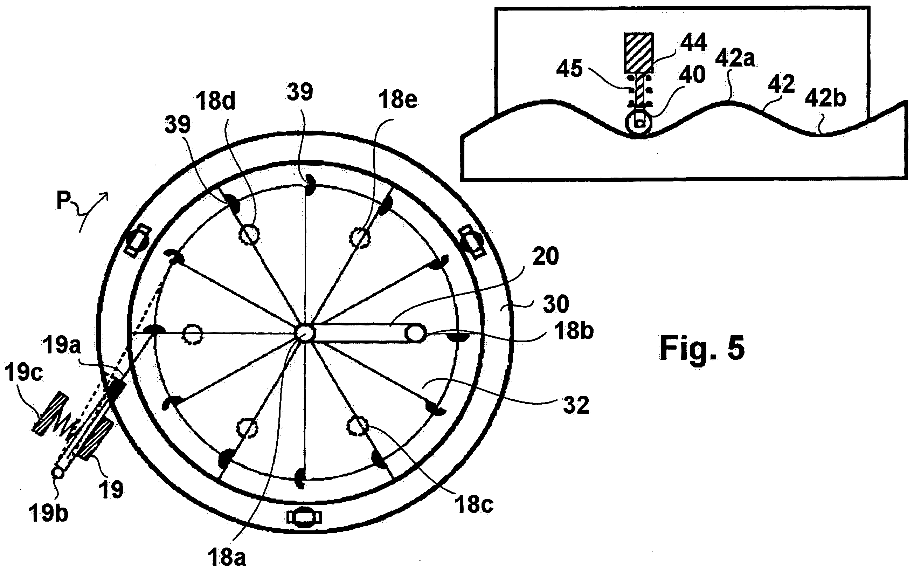

Bei dieser Ausführungsform der Fig. 2 erfolgt somit ein Einkuppeln und Auskuppeln des Revolvers 32 in Axialrichtung; hierzu sind Führungsrädchen 40 auf einer Nockenbahn 42 mit Erhebungen (Bergen) 42a und Senken (Tälern) 42b vorgesehen, wie der Detaildarstellung der Figur 5 zu entnehmen ist, die die Führungsrädchen 40 entsprechend in Seitenansicht zeigt. Die Führungsrädchen 40 sind in Führungen 44 in Axialrichtung geführt und durch als Federn 45 ausgebildete zweite Federeinrichtungen jeweils gegen die Nockenbahn 42 gedrückt, so dass sie bei Drehung des Revolvers 32 um die Rotationsachse A und somit Drehung der auf dem Revolver 32 ausgebildeten Nockenbahn 42 jeweils in Axialrichtung einfedern. Die Nockenbahn 42 ist derartig ausgebildet bzw. mit einer derartigen Welligkeit versehen, dass lediglich in den zulässigen Verstellpositionen, bei denen die interne Verteilerleitung 20 die zentrale Bohrung 31 des Stators 30 mit jeweils einem Ausgangsanschlüsse 18b bis 18e verbindet, eine Einkupplung bzw. eine Verpressung des Revolvers 32 gegen den Stator 30 erfolgt.

Somit sind vorteilhafter Weise die Federstärke der Ringfeder 34, die den Revolver 32 vom Stator 30 weg drückt, in Fig. 2 somit nach oben drückt, und die Federstärken der zweiten Federeinrichtungen 45, die den Revolver 32 in Figur 2 nach unten und somit gegen den Stator 30 drücken, aufeinander abgestimmt: wenn die Führungsrädchen 40 auf den Nockenbahnen 42 eine Erhebung 42a passieren, werden die Federeinrichtungen 45 gestaucht, so dass die von ihnen ausgeübte Federkraft zunimmt und in der Summe der Federeinrichtungen 45 die auf der Ringfeder 34 übertrifft; es erfolgt eine Einkupplung.

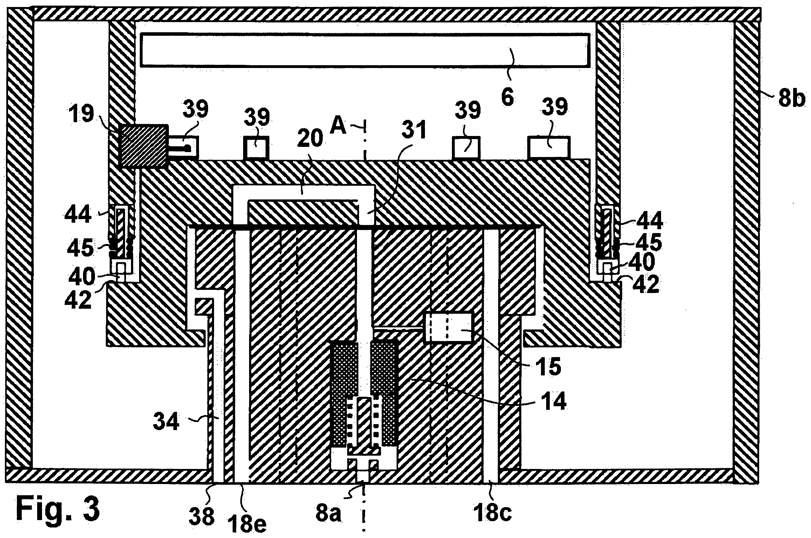

Die Fig. 3 zeigt eine derartige Belüftungsposition bzw. zulässige Verstellposition; wie einen Vergleich mit Fig. 5 zeigt, liegen die Führungsrädchen 40 hier an Erhebungen 42a an, hingegen in Fig. 2 an Senken 42b. In dieser Belüftungsposition der Fig. 3 wird somit eine der vier zulässigen Verteilstellungen erreicht. Über seine Nockenbahn 42 wird der Revolver 32 nach unten gegen den Stator 30 gedrückt. Die Entlüftung über den Entlüftungsanschluss 38 ist verschlossen; das 2/2-Sperrventil 14 wird durch die Steuereinrichtung 6 zum Öffnen durch ein Steuersignal S2 angesteuert und verbindet die Druckluftzufuhr 5 über das offene 2/2-Sperrventil 14 und die Bohrung 31 des Stators 30, die interne Verteilerleitung 20 im Revolver 32 und die hier relevante Bohrung 33 an dem gewünschten Ausgangsanschluss 18b bis 18e und somit über eine jeweilige Pneumatikeinrichtung 10 oder 11 an einen Vorderreifen 3 oder Hinterreifen 4.

Öffnen und Schließen erfolgen somit über die Nockenbahn 42 und die Führungsrädchen 40. Die Ansteuerung mit der Stellantriebsvorrichtung 19, d. h. des Revolverantriebs, über die Steuersignale S3 ist mit der Ansteuerung des zweiten Steuersignals S2 an das 2/2-Sperrventil 14 gekoppelt.

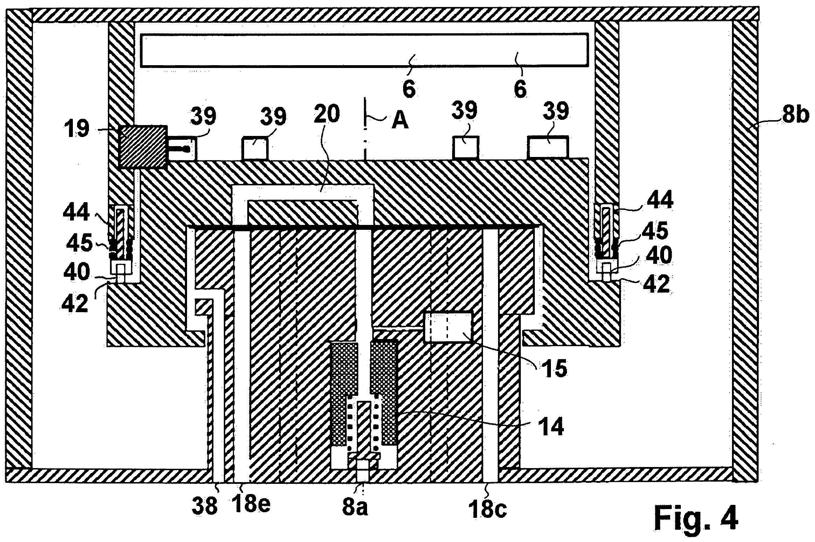

Im Anschluss an die Befüllung wird vorteilhafter Weise jeweils eine Reifendruckmessung in der Reifendruckmessposition der Fig. 4 durchgeführt, in der der Revolver 32 nicht gegenüber der Befüllposition der Fig. 3 verstellt wird, d. h. in seiner jeweiligen Drehstellung bleibt; es wird somit kein Steuersignal S3 ausgegeben. Hingegen wird über das zweite Steuersignal S2 das 2/-Sperrventil 14 geschlossen, so dass die Druckluftzufuhr 5 abgesperrt ist. Somit ist jedoch weiterhin der Drucksensor 15 über die Bohrung 31, die interne Verteilerleitung 20, die betreffende Bohrung 33 und eine unveränderte Drehübertrager-Drucksteuerung 22 und weitere, unveränderte Ventile 25 und ggf. 28 an den jeweiligen Vorderreifen oder Hinterreifen 4 angeschlossen, so dass der Drucksensor 15 somit eine Druckmessung vornehmen kann und ein Druckmess-Signal S4 an die Steuereinrichtung 6 ausgibt. Der Entlüftungsweg über den Entlüftungsanschluss 38 bleibt somit weiterhin versperrt.

In der Aufsicht der Fig. 5 ist eine Ausbildung der Stellantriebsvorrichtung 19 gezeigt, die hier als elektromagnetisches Stößel 19a vorgesehen ist, dass in einem Drehpunkt 19b gelagert ist und bei Aufnahme eines Steuersignals S3 durch einen Elektromagnet 19c (z. B. gegen eine Federwirkung) angezogen wird, so dass es um seinen Drehpunkt 19b schwenkt und bei dieser Verstellung jeweils eine der Antriebsflächen 39 betätigt, d.h. den Revolver 32 in die durch den Pfeil P dargestellte Drehrichtung schwenkt. Bei der Nockenbahn- Ausbildung reicht prinzipiell eine Verstellung von einer Senke 42b zu einer Erhebung 42a bzw. etwas über diese hinaus, so dass nachfolgend das Führungsrädchen 40 unter Entspannung seiner Federeinrichtung 45 in die nachfolgende Senke 42b hinab rollt.

Grundsätzlich sind auch andere elektrisch angesteuerte Stellantriebsvorrichtungen 19 möglich.

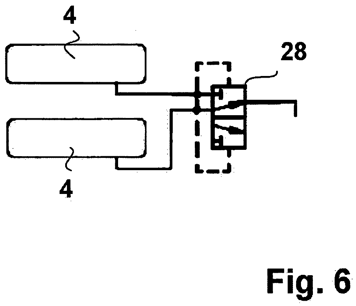

Fig. 6 zeigt eine Select-Low-Ventileinrichtung 28. Es wird immer automatisch der Hinterreifen 4 des Zwillingsreifen-Systems mit dem geringeren Druck angeschlossen. Im Falle einer Leitungs-Leckage oder eines Reifendefektes ist der intakte Reifen automatisch geschützt, da er durch die als Überströmventil ausgebildete Select-Low-Ventileinrichtung 28 abgesperrt wird. Durch eine definierte Schalthysterese, z. B. von 0,1 bar, kann sichergestellt werden, dass in dem Fall, dass beide Hinterreifen 4 den gleichen Druck aufweisen, kein hochfrequentes Schwingen der Select-Low-Ventileinrichtung 28 auftreten kann.

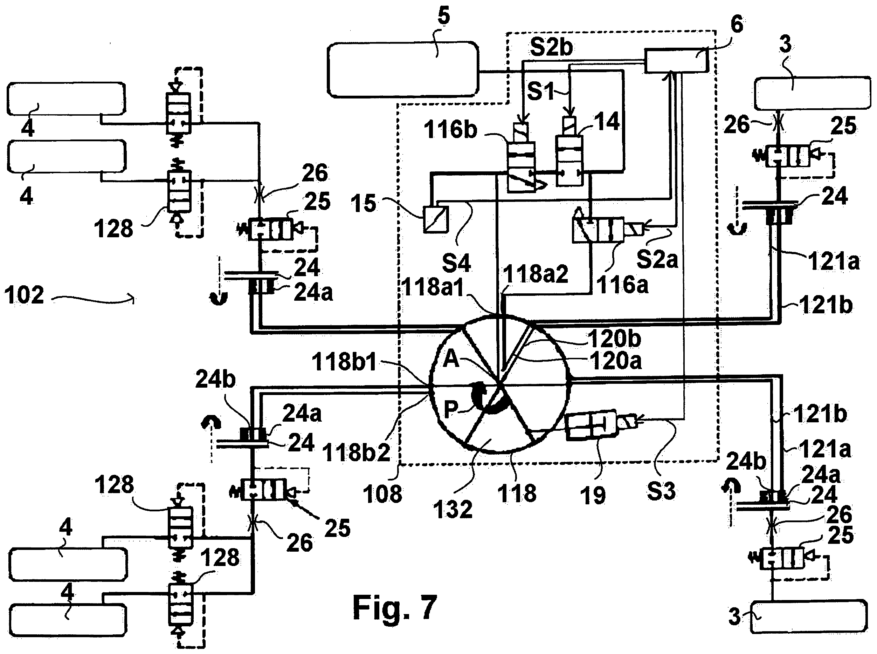

Fig. 7 zeigt eine weitere Ausführungsform eines Reifenfüllsystems 102, bei dem gleiche oder ähnliche Elemente mit gleichen oder ähnlichen Bezugszeichen wie in Fig. 1 bezeichnet werden. Bei dieser Ausführungsform ist grundsätzlich keine zweistufige Ansteuerung des Drehübertragers (rotary transmitters) 24 mehr erforderlich, sondern es werden über den Reifenfülldruck-Modulator 108 eine externe Steuerleitung 121a und eine externe Füllleitung 121 b separat angesteuert. Hierzu sind in dem Revolver 132 zwei interne Verteilerleitungen 120a und 120b ausgebildet, die jeweils parallel bzw. gleichzeitig verstellt werden. Der Reifenfülldruck-Modulator 108 weist hierzu zwei 3/2- Wegeventile 116a und 116b auf, die über Steuersignale S2a, S2b der Steuereinrichtung 6 angesteuert werden. Über das 3/2-Wegeventil 116a wird direkt die Druckluftzufuhr 5 an den Steuer-Eingangsanschluss 118a2 des Drehventils 118 gelegt und über die interne Verteilerleitung 120a in der jeweiligen Schaltstellung an eine Steuerleitung 121 a und an den Steueranschluss 24a des jeweiligen Drehübertragers 24 angeschlossen, wodurch somit eine Abdichtung (Einkupplung) bewirkt wird; nachfolgend wird das erste Steuersignal S1 an das 2/2-Sperrventil 14 ausgegeben und durch Ausgabe des Steuersignals S2b das weitere 3/2-Wegeventil 116b geöffnet, so dass das Drehventil 118 mit seinem Füll-Eingangsanschluss 118a1 mit Druckluft versorgt wird und diesen - bei unveränderter Drehstellung bzw. Schaltposition - über die interne Verteilerleitung 120b und eine externe Füllleitung 121 b an den Füllanschluss 24b des Drehübertragers 24 ausgibt.

Die Vorderreifen 3 sind wiederum über ein Reifendruck-Steuerventil 25, in Form eines einfachen Überstromventils (Überstrom-2/2-Sperrventil), und ggf. eine Drossel 26 an den Drehübertrager 24 angeschlossen. Die Ventilausbildung an den Hinterreifen 4 kann entsprechend erfolgen; bei der gezeigten Ausführungsform ist hierbei über das Reifendruck-Steuerventil 25 und die Drossel 26 parallel für jeden Hinterreifen 4 eines Zwillingsreifens ein Überstrom-Sperrventil 128 vorgesehen; grundsätzlich kann auch hier eine andere Ventilausbildung bei den Hinterreifen 4 vorgegeben sein.

Bei der Ausführungsform der Fig. 7 entfällt somit die Drehübertrager-Drucksteuerung 22 der Fig. 1, da durch die parallele Übertragung der beiden externen Verbindungsleitungen 121 a und 121 b, d.h. der Steuerleitung 121 a und der Füllleitung 121 b, eine entsprechend direkte Ansteuerung der Anschlüsse 24a und 24b des Drehübertragers 24 erfolgen kann. Grundsätzlich kann auch bei der Ausführung der Fig. 7 eine Ein- und Auskupplung durch eine Nockenbahn bzw. eine andere axiale Verstellung erfolgen.

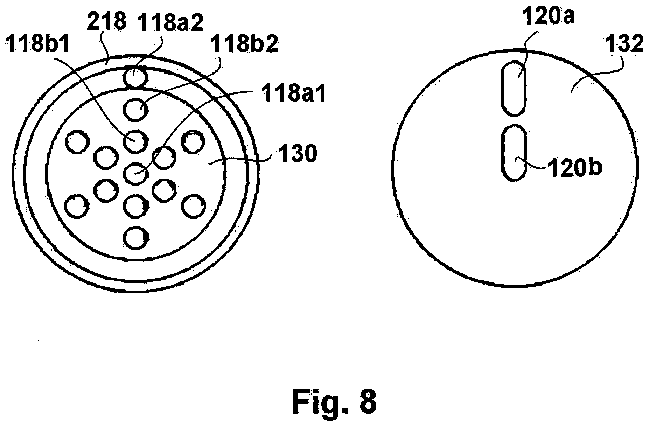

Vorteilhafterweise ist der Revolver 132 jedoch als Keramik-Revolver ausgebildet, der an einer Keramik-Fläche anlegt; es ist eine Ausbildung ohne oder mit Axialverstellung möglich. Gemäß Fig. 8 sind in dem Stator 130 Bohrungen bzw. Anschlüsse in Sternförmigem Muster vorgesehen; ein zentraler Anschluss ist als Füllleitungs-Eingangsanschluss 118a1 mittig im Stator 130; der Steuer-Eingangsanschluss 118a2 ist hingegen außermittig vorgesehen und an eine Ringnut 218 angeschlossen. Weiterhin sind in dem Stator 130 Füllleitungs-Ausgangsanschlüsse 118b1 auf einer inneren Kreisbahn vorgesehen, an die die externen Füllleitungen 121 b angeschlossen sind, und auf einer äußeren Kreisbahn Steuerleitungs-Ausgangsanschlüsse 118b2, an die jeweils eine externe Steuerleitung 121 a angeschlossen ist.

In dem Revolver 132 sind gemäß Fig. 8 die internen Verteilerleitungen 120a und 120b ausgebildet; die interne Verteilerleitung 120b dient zur Verbindung des mittigen Füllleitungs-Eingangsanschlusses 118a1 an einen auf der inneren Kreisbahn ausgebildeten Füllleitungs-Ausgangsanschluss 118b1. Entsprechend wird durch die interne Verteilerleitung 120a jeweils der äußere Steuer-Eingangsanschluss 118a2 mit einem auf einer äußeren Kreisbahn vorgesehenen Steuerleitungs-Ausgangsanschluss 118b2 verbunden. Somit können die beiden internen Verteilerleitungen 120a und 120b jeweils gleichzeitig entsprechende Anschlüsse mit einander verbinden.

Somit erfolgen bei der Ausführungsform der Fig. 7, 8 folgende Schritte des Befüll- und Mess-Vorgangs:
Von der Ruhestellung aus erfolgt eine Befüllung, indem zunächst über das Steuersignal S3 eine entsprechende Position des Revolvers 132 eingestellt wird, dass der jeweilige Vorderreifen 3 oder Hinterreifen 4 angeschlossen ist. Nachfolgend wird über das Steuersignal S2a das 3/2-Wegeventil 116a für die Steuerleitung geöffnet, und somit über die externe Steuerleitung 121 a an dem betreffenden Drehübertrager 24 der Steueranschluss 24a belüftet, und somit eine Dichtung angelegt. Nachfolgend werden das erste Steuersignal S1 und das Steuersignal S2b gleichzeitig oder sukzessiv ausgegeben, und somit Druckluft über die externe Füllleitung 121b und den Drehübertrager 24 und das sich öffnende Reifendruck-Steuerventil 25 an dem jeweiligen Reifen 3 oder 4 ausgegeben.

Zur Messung des Drucks bleibt das Steuersignal S2a ausgegeben bzw. bestehen. Das erste Steuersignal S1 wird ausgeschaltet, so dass das 2/2-Sperrventil 14 nunmehr sperrt; über die externe Füllleitung 121 b kann somit eine Druckmessung über den Drucksensor 15 erfolgen.

### Bezugszeichenliste (Teil der Beschreibung)

- 1: Fahrzeug
- 2: Reifenfüllsystem
- 3: Vorderreifen
- 4: Hinterreifen
- 5: Druckluftzufuhr
- 6: Steuereinrichtung
- 8: Reifenfülldruck-Modulator
- 8a: Drucklufteinlass / Eingangsanschuss
- 8b: Gehäuse
- 10: vordere Pneumatikeinrichtungen
- 11: hintere Pneumatikeinrichtungen
- 14: 2/2-Sperrventil (Solenoid-Sperrventil)
- 15: Drucksensor
- 16: 3/2- Wegeventil
- 18: Drehventil
- 18a: Eingangsanschluss
- 18b, 18c, 18d, 18e: Ausgangsanschlüsse
- 19: Stellantriebsvorrichtung
- 19a: elektromagnetisches Stößel
- 19b: Drehpunkt
- 19c: Elektromagnet
- 20: interne Verteilerleitung
- 21: externe Verbindungsleitungen
- 22: Drehübertrager-Drucksteuerung (rotary transmitter pressure control)
- 24: Drehübertrager (rotary transmitter)
- 24a: Steueranschluss des Drehübertragers
- 24b: Füllanschluss
- 25: Reifendruck-Steuerventil
- 26: Drossel
- 28: Select-Low-Ventileinrichtung/ Zwillingsreifen-Steuerventil
- 30: Stator
- 31: Bohrung
- 32: Revolver, Stellglied, Rotor
- 33: Bohrungen
- 34: Ringfeder, Federeinrichtung
- 35: Bohrung
- 36: Zylinderraum
- 38: Entlüftungsanschluss
- 39: Antriebsflächen
- 40: Führungsrädchen
- 42: Nockenbahn
- 42a: Erhebungen (Berge)
- 42b: Senken (Täler)
- 44: Führungen
- 45: Federn, zweite Federeinrichtung
- 102: Reifenfüllsystem
- 108: Reifenfülldruck-Modulator
- 116a, 116b: 3/2- Wegeventile
- 118: Drehventil
- 118a1: Füll-Eingangsanschluss
- 118a2: Steuer-Eingangsanschluss
- 118b1: Füllleitungs- Ausgangsanschlüsse
- 118b2: Steuerleitungs-Ausgangsanschlüsse
- 120a , 120b: interne Verteilerleitungen
- 121a: externe Steuerleitung
- 121b: externe Füllleitung
- 128: Überstrom-Sperrventil
- 130: Stator
- 132: Revolver, Stellglied, Rotor
- 218: Ringnut
- S1, S2, S3: erstes, zweites, drittes Steuersignal
- S2a: Steuersignal
- S2b: Steuersignal
- S4: Druckmess-Signal
- A: Rotationsachse
- P: Pfeil, Drehrichtung

## Patentansprüche

1. Reifenfülldruck- Einstellvorrichtung (8, 108) für ein Reifenfüllsystem (2, 102) eines Fahrzeugs (1), zum Verteilen einer Druckluftzufuhr (5) an mehrere, jeweils einen Drehübertrager (24) aufweisende Pneumatikeinrichtungen (10, 11) und zur Druckmessung der Reifenfülldrücke von an die Drehübertrager (24) angeschlossenen Fahrzeugreifen (3, 4),
wobei die Reifenfülldruck- Einstellvorrichtung (8, 108) mindestens aufweist:
eine Steuereinrichtung (6) zur Aufnahme eines Druckmess-Signals (S4) und Ausgabe von Steuersignalen (S1, S2, S2a, S2b, S3), und
eine Modulations-Ventileinrichtung (14, 16, 18; 116a, 116b, 118) zur Aufnahme der Steuersignale (S1, S2, S2a, S2b, S3) und zum pneumatischen Ansteuern eines von mehreren angeschlossenen Drehübertragern (24) zum Befüllen und Fülldruck-Messen mindestens eines an den Drehübertrager (24) angeschlossenen Fahrzeugreifens (3, 4),
**dadurch gekennzeichnet, dass**
die Modulations-Ventileinrichtung (14, 16, 18; 116a, 116b, 118) ein Drehventil (18, 118) mit einem in mehrere Drehstellungen drehbaren Stellglied (32, 132) aufweist, das in seinen Drehstellungen jeweils eine der Pneumatikeinrichtungen (10, 11) ansteuert.

2. Reifenfülldruck-Einstellvorrichtung (8, 108) nach Anspruch 1, **dadurch gekennzeichnet, dass**
die Modulations-Ventileinrichtung (14, 16, 18; 116a, 116b, 118) ein oder mehrere zwischen dem Drehventil (18, 118) und dem Druckluftanschluss (5) vorgesehene elektropneumatische Vorsteuer- Ventile (14, 16; 116a, 116b) aufweist, und
das Drehventil (18, 118), die elektropneumatischen Vorsteuer-Ventile (14, 16, 116a, 116b), ein Drucksensor (15) zur Erzeugung der Druckmess-Signale (S4) und die Steuereinrichtung (6), in einem gemeinsamen Gehäuse (8b) aufgenommen sind, und
sämtliche elektrischen Steuerleitungen zur Übertragung des Druckmess-Signals (S4) und der Steuersignale (S1, S2, S2a, S2b, S3) in dem gemeinsamen Gehäuses (8b) verlaufen.

3. Reifenfülldruck-Einstellvorrichtung (8, 108) nach Anspruch 1 oder 2, **dadurch gekennzeichnet, dass** das Drehventil (18, 118) mindestens einen Eingangsanschluss (18a; 118a1 118a2), mehrere Ausgangsanschlüsse (18b, 18c, 18d, 18e; 118b1, 118b2) und mindestens eine in dem Stellglied (32, 132) ausgebildete interne Verteilerleitung (20;120a, 120b) zum Verbinden des Eingangsanschlusses (18a; 118a1 118a2) jeweils mit einem der mehreren Ausgangsanschlüsse (18b, 18c, 18d, 18e; 118b1, 118b2) in jeweils einer der mehreren Drehstellungen aufweist.

4. Reifenfülldruck-Einstellvorrichtung (8, 108) nach Anspruch 3, **dadurch gekennzeichnet, dass** das Drehventil (18, 118) einen Stator (30, 130) und eine durch ein drittes Steuersignal (S3) der Steuereinrichtung (6) angesteuerte Stellantriebsvorrichtung (19) zum Drehen des Stellglieds (32, 132) gegenüber dem Stator (30, 130) aufweist,
wobei in dem Stator (30, 130) der mindestens eine Eingangsanschluss (18a; 118a1, 118a2) und die mehreren Ausgangsanschlüsse (18b, 18c, 18d, 18e; 118b1, 118b2) ausgebildet sind und das Stellglied (32, 132) an oder in dem Stator (30, 130) um eine Rotationsachse (A) drehbar aufgenommen ist.

5. Reifenfülldruck-Einstellvorrichtung (8, 108) nach Anspruch 4, **dadurch gekennzeichnet, dass** der Eingangsanschluss (18a, 118a1) des Stators (30, 130) in der Rotationsachse (A) liegt und die Ausgangsanschlüsse (18b, 18c, 18d, 18e; 118b1, 118b2) auf mindestens einer Kreisbahn liegen.

6. Reifenfülldruck-Einstellvorrichtung (108) nach Anspruch, 5 **dadurch gekennzeichnet, dass** der Stator (130) zusätzlich zu dem radial inneren ersten Eingangsanschluss (118a1) einen auf einer radial außerhalb der Ausgangsanschlüsse (118b1, 118b2) liegenden äußeren Kreisbahn angeordneten zweiten Eingangsanschluss (118a2) aufweist,
wobei das Stellglied (132) ein Lochmuster zur Verbindung der Ausgangsanschlüsse (118b1, 118b2) und der Eingangsanschlüsse (18; 118a1, 118a2) aufweist.

7. Reifenfülldruck-Einstellvorrichtung (8, 108) nach einem der Ansprüche 4 bis 6, **dadurch gekennzeichnet, dass** der Stator (30, 130) mehrere Bohrungen (33, 34) aufweist und der Drucksensor (15) und zwischen dem Druckluftanschluss (5) und dem Drehventil (18, 118) vorgesehene Vorsteuer-Ventile (14, 15, 16; 116a, 116b) der Modulations- Ventileinrichtung in dem Stator (30, 130) aufgenommen und an die Bohrungen (33) angeschlossen sind.

8. Reifenfülldruck-Einstellvorrichtung (8) nach einem der Ansprüche 4 bis 7, **dadurch gekennzeichnet, dass** die Stellantriebsvorrichtung (19) das Stellglied (32, 132) nur in einer Drehrichtung (P) und um jeweils einen festen Drehwinkel dreht, z. B. als elektromagnetisches Stößel (19a).

9. Reifenfülldruck-Einstellvorrichtung (8) nach einem der Ansprüche 4 bis 8, **dadurch gekennzeichnet, dass** das drehbare Stellglied (32) gegenüber dem Stator (30) in axialer Richtung entlang der Rotationsachse (A) verstellbar ist und in Zwischenstellungen zwischen den zulässigen Drehstellungen von dem Stator (30) abgehoben ist.

10. Reifenfülldruck-Einstellvorrichtung (8) nach Anspruch 9, **dadurch gekennzeichnet, dass** zwischen dem Stellglied (32) einerseits und dem Stator (30) oder einem Gehäuse (8b) andererseits eine federvorgespannte Gleit- oder Rolleinrichtung (40,42) ausgebildet ist zur Verstellung des Stellglieds (32) in der axialen Richtung in Abhängigkeit seiner Drehposition,
wobei eine erste Federeinrichtung (34) zur Ausbildung einer das Stellglied (32) von dem Stator (30) weg drückenden ersten Federkraft und eine zweite Federeinrichtung (45) zur Ausübung einer das Stellglied (32) auf den Stator (30) drückenden zweiten Federkraft ausgebildet ist,
wobei die zweite Federkraft von der Drehstellung des Stellglieds (32) abhängig ist derartig, dass die zweite Federkraft in den zulässigen Drehstellungen des Stellglieds (32) größer als die erste Federkraft und in den Zwischenstellungen kleiner als die erste Federkraft ist.

11. Reifenfülldruck-Einstellvorrichtung (8) nach Anspruch 10, **dadurch gekennzeichnet, dass** die zweite Federeinrichtung (45) an einer Nockenbahn (42) vorgesehen ist.

12. Reifenfülldruck-Einstellvorrichtung (108) nach einem der Ansprüche 4 bis 8, **dadurch gekennzeichnet, dass** der Stator (130) ein Lochmuster aus Eingangsanschlüssen und Ausgangsanschlüssen aufweist, die die mindestens eine Verbindungsleitung des Stellglieds (132) selektiv mit einander verbinden.

13. Reifenfülldruck-Einstellvorrichtung (108) nach Anspruch 12, **dadurch gekennzeichnet, dass** das Stellglied (132) und/oder der Stator (130) eine Keramikfläche zur gleitenden Verstellung des Stellglieds (132) auf dem Stator (130) ohne axialen Versatz aufweist.

14. Reifenfüllsystem (2, 102), das eine Reifenfülldruck-Einstellvorrichtung (8, 108) nach einem der vorherigen Ansprüche und mehrere, jeweils einen Drehübertrager (24) aufweisende Pneumatikeinrichtungen (10, 11) aufweist, an die jeweils mindestens ein Fahrzeugreifen (3, 4) angeschlossen ist.

15. Reifenfüllsystem (2) nach Anspruch 14, **dadurch gekennzeichnet, dass** zwischen dem Drehventil (18) und jeder Pneumatikeinrichtung (10, 11) genau eine externe Verbindungsleitung (21) vorgesehen ist und die Pneumatikeinrichtungen (10, 11) jeweils eine Drehübertrager- Drucksteuerung (22) aufweist zur sukzessiven Ansteuerung zunächst eines Steueranschlusses (24a) des Drehübertragers (24) zum Abdichten und Einkuppeln und nachfolgenden Ansteuerung eines Füllanschlusses (24b) des Drehübertragers (24) zum Befüllen des Reifen (3, 4) und/oder für eine Reifenfülldruck-Messung.

16. Reifenfüllsystem (102) nach Anspruch 14, **dadurch gekennzeichnet, dass** von dem Drehventil (118) zu den Drehübertragern (24) als externe Verbindungsleitungen (121a, 121b) jeweils eine Steuerleitung (121 a) für den Steueranschluss (24a) des Drehübertrages (24) und eine Fülldruck- und Messleitung (121 b) zu dem Füllanschluss (24b) des Drehübertrages verlaufen,
wobei das Drehventil (118) zwei Eingangs-Anschlüsse (118a1, 118a2) und für jeden Drehübertrager (24) zwei Ausgangsanschlüsse (118b1, 118b2) aufweist und in dem Stellglied (132) zwei interne Verteilerleitungen (120a, 120b) ausgebildet sind.

17. Fahrzeug (1) mit einem Reifenfüllsystem (2, 102) nach einem der Ansprüche 14 bis 16 und mehreren Fahrzeugreifen (3, 4), wobei die Drehübertrager (24) zum selektiven Verbinden jeweils eines Reifens (3) oder eines Paares von Reifen (4) mit dem Reifenfülldruck-Modulators (8, 108) vorgesehen sind.

## Claims

1. Tire pressure adjustment apparatus (8, 108) for a tire inflation system (2, 102) of a vehicle (1), for the purposes of distributing a compressed-air supply (5) to multiple pneumatic devices (10, 11) which each have a rotary transmitter (24) and for the purposes of pressure measurement of the tire pressures of vehicle tires (3, 4) connected to the rotary transmitters (24),
wherein the tire pressure adjustment apparatus (8, 108) has at least:
a control device (6) for receiving a pressure measurement signal (S4) and for outputting control signals (S1, S2, S2a, S2b, S3), and
a modulation valve device (14, 16, 18; 116a, 116b, 118) for receiving the control signals (S1, S2, S2a, S2b, S3) and for the pneumatic actuation of one of several connected rotary transmitters (24) for the inflation and pressure measurement of at least one vehicle tire (3, 4) connected to the rotary transmitter (24),
**characterized in that**
the modulation valve device (14, 16, 18; 116a, 116b, 118) has a rotary valve (18, 118) with a positioner (32, 132) which is rotatable into multiple rotational settings and which, in its rotational settings, actuates in each case one of the pneumatic devices (10, 11).

2. Tire pressure adjustment apparatus (8, 108) according to Claim 1, **characterized in that** the modulation valve device (14, 16, 18; 116a, 116b, 118) has one or more electropneumatic pilot control valves (14, 16; 116a, 116b) provided between the rotary valve (18, 118) and the compressed-air port (5), and
the rotary valve (18, 118), the electropneumatic pilot control valves (14, 16, 116a, 116b), a pressure sensor (15) for generating the pressure measurement signals (S4) and the control device (6) are accommodated in a common housing (8b), and all of the electrical control lines for the transmission of the pressure measurement signal (S4) and of the control signals (S1, S2, S2a, S2b, S3) run in the common housing (8b).

3. Tire pressure adjustment apparatus (8, 108) according to Claim 1 or 2, **characterized in that** the rotary valve (18, 118) has at least one inlet port (18a, 118a1, 118a2), multiple outlet ports (18b, 18c, 18d, 18e; 118b1, 118b2) and at least one internal distributor line (20; 120a, 120b) which is formed in the positioner (32, 132) and which serves for connecting the inlet port (18a, 118a1, 118a2) to in each case one of the multiple outlet ports (18b, 18c, 18d, 18e; 118b1, 118b2) in in each case one of the multiple rotational settings.

4. Tire pressure adjustment apparatus (8, 108) according to Claim 3, **characterized in that** the rotary valve (18, 118) has a stator (30, 130) and a positioning drive apparatus (19) which is actuated by way of a third control signal (S3) of the control device (6) and which serves for rotating the positioner (32, 132) relative to the stator (30, 130),
wherein the at least one inlet port (18a; 118a1, 118a2) and the multiple outlet ports (18b, 18c, 18d, 18e; 118b1, 118b2) are formed in the stator (30, 130), and the positioner (32, 132) is received on or in the stator (30, 130) so as to be rotatable about an axis of rotation (A).

5. Tire pressure adjustment apparatus (8, 108) according to Claim 4, **characterized in that** the inlet port (18a, 118a1) of the stator (30, 130) lies in the axis of rotation (A), and the outlet ports (18b, 18c, 18d, 18e; 118b1, 118b2) lie on at least one circular path.

6. Tire pressure adjustment apparatus (108) according to Claim 5, **characterized in that** the stator (130) has, in addition to the radially inner, first inlet port (118a1), a second inlet port (118a2) which is arranged on an outer circular path situated radially outside the outlet ports (118b1, 118b2),
wherein the positioner (132) has a pattern of holes for the connection of the outlet ports (118b1, 118b2) and of the inlet ports (18; 118a1, 118a2).

7. Tire pressure adjustment apparatus (8, 108) according to one of Claims 4 to 6, **characterized in that** the stator (30, 130) has multiple bores (33, 34), and the pressure sensor (15) and pilot control valves (14, 15, 16; 116a, 116b), which are provided between the compressed-air port (5) and the rotary valve (18, 118), of the modulation valve device are accommodated in the stator (30, 130) and connected to the bores (33).

8. Tire pressure adjustment apparatus (8) according to one of Claims 4 to 7, **characterized in that** the positioning drive apparatus (19) rotates the positioner (32, 132) only in one direction of rotation (P) and by in each case a fixed angle of rotation, for example as an electromagnetic plunger (19a).

9. Tire pressure adjustment apparatus (8) according to one of Claims 4 to 8, **characterized in that** the rotatable positioner (32) is adjustable relative to the stator (30) in an axial direction along the axis of rotation (A) and, in intermediate settings between the admissible rotational settings, is lifted from the stator (30).

10. Tire pressure adjustment apparatus (8) according to Claim 9, **characterized in that**, between the positioner (32), on the one hand, and the stator (30) or a housing (8b), on the other hand, there is formed a spring-preloaded sliding or rolling means (40, 42) for the adjustment of the positioner (32) in the axial direction in a manner dependent on its rotational setting,
wherein a first spring device (34) is designed to generate a first spring force, which pushes the positioner (32) away from the stator (30), and a second spring device (45) is designed to impart a second spring force, which pushes the positioner (32) against the stator (30),
wherein the second spring force is dependent on the rotational setting of the positioner (32), such that, in the admissible rotational settings of the positioner (32), the second spring force is greater than the first spring force, and in the intermediate settings, said second spring force is lower than the first spring force.

11. Tire pressure adjustment apparatus (8) according to Claim 10, **characterized in that** the second spring device (45) is provided on a cam track (42).

12. Tire pressure adjustment apparatus (108) according to one of Claims 4 to 8, **characterized in that** the stator (130) has a pattern of holes composed of inlet ports and outlet ports, which are selectively connected to one another by the at least one connecting line of the positioner (132).

13. Tire pressure adjustment apparatus (108) according to Claim 12, **characterized in that** the positioner (132) and/or the stator (130) has a ceramic surface for the sliding adjustment of the positioner (132) on the stator (130) without an axial offset.

14. Tire inflation system (2, 102) which has a tire pressure adjustment apparatus (8, 108) according to one of the preceding claims and multiple pneumatic devices (10, 11) which each have a rotary transmitter (24) and to which in each case at least one vehicle tire (3, 4) is connected.

15. Tire inflation system (2) according to Claim 14, **characterized in that** precisely one external connecting line (21) is provided between the rotary valve (18) and each pneumatic device (10, 11), and the pneumatic devices (10, 11) each have a rotary transmitter pressure controller (22) for the successive actuation, firstly, of a control port (24a) of the rotary transmitter (24) for sealing-off and coupling and, subsequently, of an inflation port (24b) of the rotary transmitter (24) for inflating the tire (3, 4) and/or for tire pressure measurement.

16. Tire inflation system (102) according to Claim 14, **characterized in that**, as external connecting lines (121a, 121b) from the rotary valve (118) to the rotary transmitters (24), there extends in each case one control line (121a) for the control port (24a) of the rotary transmitter (24) and one pressure and measurement line (121b) to the inflation port (24b) of the rotary transmitter, wherein the rotary valve (118) has two inlet ports (118a1, 118a2) and, for each rotary transmitter (24), two outlet ports (118b1, 118b2), and two internal distributor lines (120a, 120b) are formed in the positioner (132).

17. Vehicle (1) having a tire inflation system (2, 102) according to one of Claims 14 to 16 and having multiple vehicle tires (3, 4), wherein the rotary transmitters (24) are provided for selectively connecting in each case one tire (3) or one pair of tires (4) to the tire pressure modulator (8, 108).

## Revendications

1. Dispositif de réglage de la pression de gonflage des pneus (8, 108) pour un système de gonflage des pneus (2, 102) d'un véhicule (1), destiné à distribuer une arrivée d'air comprimé (5) à plusieurs appareils pneumatiques (10, 11), possédant respectivement un transmetteur rotatif (24), et à mesurer les pressions de gonflage de pneu des pneus de véhicule (3, 4) raccordés aux transmetteurs rotatifs (24),
le dispositif de réglage de la pression de gonflage des pneus (8, 108) possédant au moins :
un appareil de commande (6) destiné à acquérir un signal de mesure de pression (S4) et à délivrer des signaux de commande (S1, S2, S2a, S2b, S3) et un appareil à vanne de modulation (14, 16, 18 ; 116a, 116b, 118) destiné à acquérir les signaux de commande (S1, S2, S2a, S2b, S3) et à commander pneumatiquement un parmi plusieurs transmetteurs rotatifs (24) raccordés pour le gonflage et la mesure de la pression de gonflage d'au moins un pneu de véhicule (3, 4) raccordé au transmetteur rotatif (24),
**caractérisé en ce que**
l'appareil à vanne de modulation (14, 16 18 ; 116a, 116b, 118) possède une vanne rotative (18, 118) munie d'un actionneur (32, 132) pouvant effectuer une rotation dans plusieurs positions de rotation et qui commande respectivement l'un des appareils pneumatiques (10, 11) dans ses positions de rotation.

2. Dispositif de réglage de la pression de gonflage des pneus (8, 108) selon la revendication 1, **caractérisé en ce que**
l'appareil à vanne de modulation (14, 16 18 ; 116a, 116b, 118) possède une ou plusieurs vannes pilotes électropneumatiques (14, 16, 116a, 116b) présentes entre la vanne rotative (18, 118) et le raccord à air comprimé (5), et
la vanne rotative (18, 118), les vannes pilotes électropneumatiques (14, 16 , 116a, 116b), un capteur de pression (15) destiné à générer les signaux de mesure de pression (S4) et l'appareil de commande (6) sont logés dans un boîtier (8b) commun, et
toutes les lignes de commande électriques destinées à la transmission du signal de mesure de pression (S4) et des signaux de commande (S1, S2, S2a, S2b, S3) passent dans le boîtier (8b) commun.

3. Dispositif de réglage de la pression de gonflage des pneus (8, 108) selon la revendication 1 ou 2, **caractérisé en ce que** la vanne rotative (18, 118) possède au moins un raccord d'entrée (18a ; 118a1 118a2), plusieurs raccords de sortie (18b, 18c, 18d, 18e ; 118b1, 118b2) et au moins une ligne de distribution interne (20 ; 120a, 120b) formée dans l'actionneur (32, 132) servant à relier le raccord d'entrée (18a ; 118a1, 118a2) respectivement avec l'un des plusieurs raccords de sortie (18b, 18c, 18d, 18e ; 118b1, 118b2) dans l'une respective des plusieurs positions de rotation.

4. Dispositif de réglage de la pression de gonflage des pneus (8, 108) selon la revendication 3, **caractérisé en ce que** la vanne rotative (18, 118) possède un stator (30, 130) et un dispositif d'entraînement de positionnement (19) commandé par un troisième signal de commande (S3) de l'appareil de commande (6) pour faire tourner l'actionneur (32, 132) par rapport au stator (30, 130),
l'au moins un raccord d'entrée (18a ; 118a1, 118a2) et les plusieurs raccords de sortie (18b, 18c, 18d, 18e ; 118b1, 118b2) étant formés dans le stator (30, 130) et l'actionneur (32, 132) étant monté rotatif autour d'un axe de rotation (A) sur ou dans le stator (30, 130).

5. Dispositif de réglage de la pression de gonflage des pneus (8, 108) selon la revendication 4, **caractérisé en ce que** le raccord d'entrée (18a, 118a1) du stator (30, 130) se trouve dans l'axe de rotation (A) et les raccords de sortie (18b, 18c, 18d, 18e ; 118b1, 118b2) se trouvent sur au moins une trajectoire circulaire.

6. Dispositif de réglage de la pression de gonflage des pneus (108) selon la revendication 5, **caractérisé en ce que** le stator (130) possède, en plus
du premier raccord d'entrée (118a1) intérieur radial, un deuxième raccord d'entrée (118a2) disposé sur une trajectoire circulaire extérieure qui se trouve dans le sens radial en-dehors des raccords de sortie (118b1, 118b2),
l'actionneur (132) possédant un motif à trous servant à relier les raccords de sortie (118b1, 118b2) et les raccords d'entrée (18 ; 118a1, 118a2).

7. Dispositif de réglage de la pression de gonflage des pneus (8, 108) selon l'une des revendications 4 à 6, **caractérisé en ce que** le stator (30, 130) possède plusieurs perçages (33, 34) et le capteur de pression (15) ainsi que les vannes pilotes (14, 15, 16 ; 116a, 116b) de l'appareil à vanne de modulation, présentes entre le raccord à air comprimé (5) et la vanne rotative (18, 118), sont logés dans le stator (30, 130) et sont raccordés aux perçages (33).

8. Dispositif de réglage de la pression de gonflage des pneus (8) selon l'une des revendications 4 à 7, **caractérisé en ce que** le dispositif d'entraînement de positionnement (19) ne fait tourner l'actionneur (32, 132) que dans un sens de rotation (P) et à chaque fois d'un angle de rotation fixe, par exemple comme un poussoir électromagnétique (19a).

9. Dispositif de réglage de la pression de gonflage des pneus (8) selon l'une des revendications 4 à 8, **caractérisé en ce que** l'actionneur (32) rotatif peut être positionné par rapport au stator (30) dans le sens axial le long de l'axe de rotation (A) et il est soulevé du stator (30) dans des positions intermédiaires entre les positions de rotation admissibles.

10. Dispositif de réglage de la pression de gonflage des pneus (8) selon la revendication 9, **caractérisé en ce qu'**entre l'actionneur (32) d'un côté et le stator (30) ou un boîtier (8b) de l'autre côté est formé un appareil de glissement ou de roulage (40, 42) précontraint par ressort, destiné au positionnement de l'actionneur (32) dans le sens axial en fonction de sa position de rotation,
un premier appareil à ressort (34) destiné à former une première force de ressort qui repousse l'actionneur (32) à distance du stator (30) et un deuxième appareil à ressort (45) destiné à exercer une deuxième force de ressort qui pousse l'actionneur (32) contre le stator (30) étant formés,
la deuxième force de ressort étant dépendante de la position de rotation de l'actionneur (32) de telle sorte que la deuxième force de ressort est supérieure à la première force de ressort dans les positions de rotation admissibles de l'actionneur (32) et inférieure à la première force de ressort dans les positions intermédiaires.

11. Dispositif de réglage de la pression de gonflage des pneus (8) selon la revendication 10, **caractérisé en ce que** le deuxième appareil à ressort (45) se trouve sur une trajectoire de came (42).

12. Dispositif de réglage de la pression de gonflage des pneus (108) selon l'une des revendications 4 à 8, **caractérisé en ce que** le stator (130) possède un motif à trous composé de raccords d'entrée et de raccords de sortie, lesquels sont reliés sélectivement les uns aux autres par l'au moins une ligne de liaison de l'actionneur (132).

13. Dispositif de réglage de la pression de gonflage des pneus (108) selon la revendication 12, **caractérisé en ce que** l'actionneur (132) et/ou le stator (130) possèdent une surface en céramique destinée au positionnement par glissement de l'actionneur (132) sur le stator (130) sans décalage axial.

14. Système de gonflage des pneus (2, 102) qui possède un dispositif de réglage de la pression de gonflage des pneus (8, 108) selon l'une des revendications précédentes et plusieurs appareils pneumatiques (10, 11), possédant respectivement un transmetteur rotatif (24) et auxquels est respectivement raccordé au moins un pneu de véhicule (3, 4).

15. Système de gonflage des pneus (2) selon la revendication 14, **caractérisé en ce qu'**entre la vanne rotative (18) et chaque appareil pneumatique (10, 11) se trouve exactement une ligne de liaison externe (21) et les appareils pneumatiques (10, 11) possèdent respectivement une commande de pression de transmetteur rotatif (22) destinée à la commande successive tout d'abord d'un raccord de commande (24a) du transmetteur rotatif (24) en vue de la réalisation de l'étanchéité et de l'accouplement, et ensuite la commande d'un raccord de gonflage (24b) du transmetteur rotatif (24) en vue du gonflage du pneu (3, 4) et/ou pour une mesure de la pression de gonflage de pneu.

16. Système de gonflage des pneus (102) selon la revendication 14, **caractérisé en ce que** les lignes de liaison externes (121a, 121b) qui s'étendent de la vanne rotative (118) aux transmetteurs rotatifs (24) sont respectivement une ligne de commande (121a) pour le raccord de commande (24a) du transmetteur rotatif (24) et une ligne de pression de gonflage et de mesure (121b) vers le raccord de gonflage (24b) du transmetteur rotatif,
la vanne rotative (118) possédant deux raccords d'entrée (118a1, 118a2) et, pour chaque transmetteur rotatif (24), deux raccords de sortie (118b1, 118b2), et deux lignes de liaison internes (120a, 120b) étant formées dans l'actionneur (132).

17. Véhicule (1) comprenant un système de gonflage des pneus (2, 102) selon l'une des revendications 14 à 16 et plusieurs pneus de véhicule (3, 4), les transmetteurs rotatifs (24) étant conçus pour la liaison sélective respectivement d'un pneu (3) ou d'une paire de pneus (4) avec le modulateur de pression de gonflage des pneus (8, 108).
